# EUROPEAN PATENT SPECIFICATION

(11) **EP 1 483 731 B1**
(45) Date of publication and mention of the grant of the patent: **27.09.2006**
(21) Application number: 03701320.8
(22) Date of filing: 12.02.2003
(51) Int. Cl.: G06K 11/06, G06K 15/02, G06F 3/033, B41J 3/36, B41J 3/42

(54) **SWIPE MOUSE**
SWIPE-MAUS
SOURIS MAGNETIQUE

(30) Priority: 13.02.2002 AU PS049502
(43) Date of publication of application: 08.12.2004
(73) Proprietor: Silverbrook Research Pty. Limited, Balmain, NSW 2041 (AU)
(72) Inventor: SILVERBROOK, KIA Silverbrook Research Pty Ltd, Balmain, New South Wales 2041 (AU)
(74) Representative: Moore, Barry
(86) International application number: PCT/AU2003/000146
(87) International publication number: WO 2003/069546

(56) References cited:
- EP-A- 0 642 097
- EP-A- 0 951 174
- EP-A- 1 227 432
- US-A- 5 311 208
- US-A1- 2001 024 586

## Description

### FIELD OF INVENTION

The following invention relates to computer pointing device technology and printing. More particularly, though not exclusively, the invention relates to a mouse having a built-in printer.

### BACKGROUND OF THE INVENTION

Modem desktop computers and their associated peripheral devices take up a lot of desk space. Desktop scanners, printers, monitors, keyboards and mouse pointing devices all demand desk space. Particularly monopolizing of desk space are desktop printers and mouse pointers. Mouse pointers themselves are quite small, but they require a large area of desk space in use.

The mere incorporation into a mouse body of a known printer device would not result in a compact, easily manoeuvrable mouse. This is because prior art printers incorporate a supply of print media and employ a print media feed mechanism to transport the print media past the printhead to effect printing onto the print media. Moreover, known printers, having a supply of print media, are large and heavier than would be desirable in a mouse pointing device.

### SUMMARY OF THE INVENTION

In accordance with the invention, there is provided a mouse pointing device comprising:
a housing;
a motion sensor mounted to the housing and serving to relay positional data from the device to a computer so as to effect motion of a graphic pointer on a monitor associated with the computer; and
a printer located within the housing and configured to receive print data from the computer, the printer being configured to print an image, based on the print data, onto print media external to said housing as the housing traverses said media, said motion sensor providing positional data of the housing relative to said print media to the printer during printing, and an ink cartridge bay provided in the housing for receiving an ink cartridge in use to thereby supply ink to the printer, the housing including a number of flexible collars extending into the ink cartridge bay.

In a preferred form, the printer includes a drop-on-demand inkjet printhead including a plurality of ink ejection nozzles.

Preferably, the housing also includes a print controller including a computer processor into which the print data can be input and converted into a sequence of drop ejection control signals. In this case, the print controller operates the ink ejection nozzles in accordance with the drop ejection control signals to cause printing on the print media at a rate determined using a measured relative speed between the printhead and the print media.

Preferably, the motion sensor includes a light source to emit light onto a surface on which the device is used. Light reflected from the surface passes through a lens to a CCD chip.

It is particularly preferred that the printer includes a printhead fabricated at least partially using microelectromechanical processes.

### CO-PENDING APPLICATIONS

Various methods, systems and apparatus relating to the present invention are disclosed in the following co-pending applications filed by the applicant or assignee of the present invention on 12 February 2003:

| | | | |
|---|---|---|---|
| PCT/AU03/00154 | PCT/AU03/00151 | PCT/AU03/00150 | PCT/AU03/00145 |
| PCT/AU03/00153 | PCT/AU03/00152 | PCT/AU03/00168 | PCT/AU03/00169 |
| PCT/AU03/00170 | PCT/AU03/00162 | PCT/AU03/00146 | PCT/AU03/00159 |
| PCT/AU03/00171 | PCT/AU03/00149 | PCT/AU03/00167 | PCT/AU03/00158 |
| PCT/AU03/00147 | PCT/AU03/00166 | PCT/AU03/00164 | PCT/AU03/00163 |
| PCT/AU03/00165 | PCT/AU03/00160 | PCT/AU03/00157 | PCT/AU03/00148 |
| PCT/AU03/00156 | PCT/AU03/00155 | | |

### RELATED PATENT APPLICATIONS AND PATENTS

| | | | |
|---|---|---|---|
| US6,227,652 | US6,213,588 | US6,213,589 | US6,231,163 |
| US6,247,795 | US6,394,581 | US6,244,691 | US6,257,704 |
| US6,416,168 | US6,220,694 | US6,257,705 | US6,247,794 |
| US6,234,610 | US6,247,793 | US6,264,306 | US6,241,342 |
| US6,247,792 | US6,264,307 | US6,254,220 | US6,234,611 |
| US6,302,528 | US6,283,582 | US6,239,821 | US6,338,547 |
| US6,247,796 | US09/113,122 | US6,390,603 | US6,362,843 |
| US6,293,653 | US6,312,107 | US6,227,653 | US6,234,609 |
| US6,238,040 | US6,188,415 | US6,227,654 | US6,209,989 |
| US6,247,791 | US6,336,710 | US6,217,153 | US6,416,167 |
| US6,243,113 | US6,283,581 | US6,247,790 | US6,260,953 |
| US6,267,469 | US6,273,544 | US6,309,048 | US6,420,196 |
| US6,443,558 | US09/422,892 | US6,378,989 | US09/425,420 |
| US09/422,893 | US09/609,140 | US6,409,323 | US6,281,912 |
| US09/575,113 | US6,318,920 | US6,488,422 | US09/693,644 |
| US6,457,810 | US6,485,135 | US09/112,763 | US6,331,946 |
| US6,246,970 | US6,442,525 | US09/505,951 | US09/S05,147 |
| US09/505,952 | US09/575,108 | US09/575,109 | US09/575,110 |
| US09/607,985 | US6,398,332 | US6,394,573 | US09/606,999 |
| US6,238,044 | US6,425,661 | US6,390,605 | US6,322,195 |
| US09/504,221 | US6,480,089 | US6,460,778 | US6,305,788 |
| US6,426,014 | US6,364,453 | US6,457,795 | US09/556,219 |
| US09/556,218 | US6,315,399 | US6,338,548 | US09/575,190 |
| US6,328,431 | US6,328,425 | US09/575,127 | US6,383,833 |
| US6,464,332 | US6,390,591 | US09/575,152 | US6,328,417 |
| US6,322,194 | US09/575,177 | US09/575,175 | US6,417,757 |
| US09/608,780 | US6,428,139 | US09/607,498 | US09/693,079 |
| US09/693,135 | US6,428,142 | US09/692,813 | US09/693,319 |
| US09/693,311 | US6,439,908 | US09/693,735 | PCT/AU98/00550 |
| PCT/AU00/00516 | PCT/AU00/00517 | PCT/AU00/00511 | PCT/AU00/00754 |
| PCT/AU00/00755 | PCT/AU00/00756 | PCT/AU00/00757 | PCT/AU00/00095 |
| PCT/AU00/00172 | PCT/AU00/00338 | PCT/AU00/00339 | PCT/AU00/00340 |
| PCT/AU00/00341 | PCT/AU00/00581 | PCT/AU00/00580 | PCT/AU00/00582 |
| PCT/AU00/00587 | PCT/AU00/00588 | PCT/AU00/00589 | PCT/AU00/00583 |
| PCT/AU00/00593 | PCT/AU00/00590 | PCT/AU00/00591 | PCT/AU00/00592 |
| PCT/AU00/00584 | PCT/AU00/00585 | PCT/AU00/00586 | PCT/AU00/00749 |
| PCT/AU00/00750 | PCT/AU00/00751 | PCT/AU00/00752 | PCT/AU01/01332 |
| PCT/AU01/01318 | PCT/AU00/01513 | PCT/AU00/01514 | PCT/AU00/01515 |
| PCT/AU00/01516 | PCT/AU00/01517 | PCT/AU00/01512 | PCT/AU01/00502 |
| PCT/AU02/01120 | PCT/AU00/00333 | PCT/AU01/00141 | PCT/AU01/00139 |
| PCT/AU01/00140 | PCT/AU00/00753 | PCT/AU01/01321 | PCT/AU01/01322 |
| PCT/AU01/01323 | PCT/AU00/00594 | PCT/AU00/00595 | PCT/AU00/00596 |
| PCT/AU00/00597 | PCT/AU00/00598 | PCT/AU00/00741 | PCT/AU00/00742 |

### BRIEF DESCRIPTION OF THE DRAWINGS

A preferred form of the present invention will now be described, by way of example only, with reference to the accompanying drawings, in which:
Fig. 1 is a schematic perspective illustration of a mouse having almost completed the printing of an image onto a page, the mouse being in accordance with the invention;
Fig. 2 is a schematic perspective illustration of the mouse;
Fig. 3 is a schematic inverted perspective illustration of the mouse;
Fig. 4 is a schematic inverted exploded perspective illustration of the mouse;

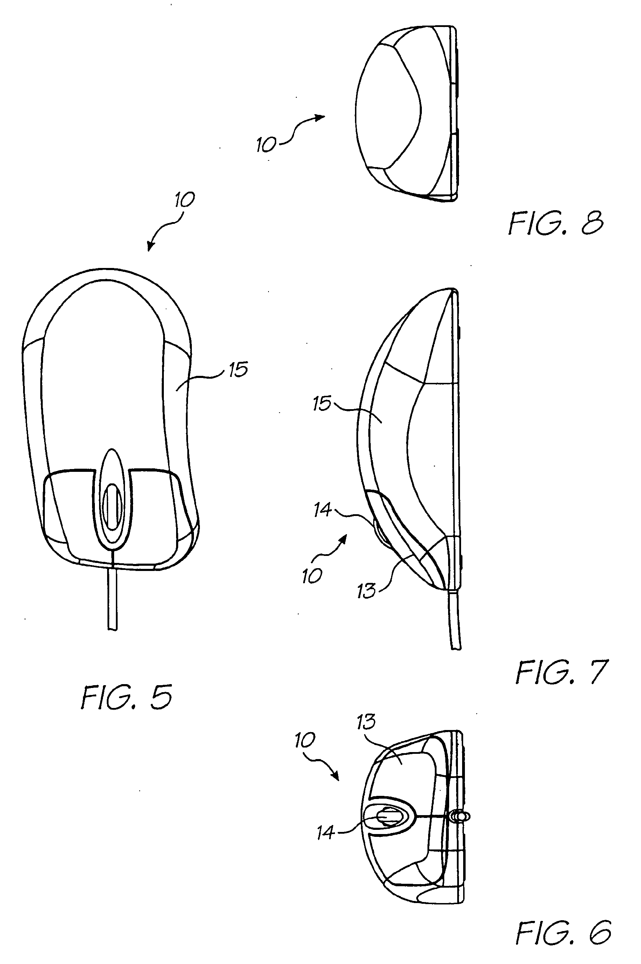

Fig. 5 is a plan view of the mouse;
Fig. 6 is a front elevational view of the mouse;
Fig. 7 is a side elevational view of the mouse;

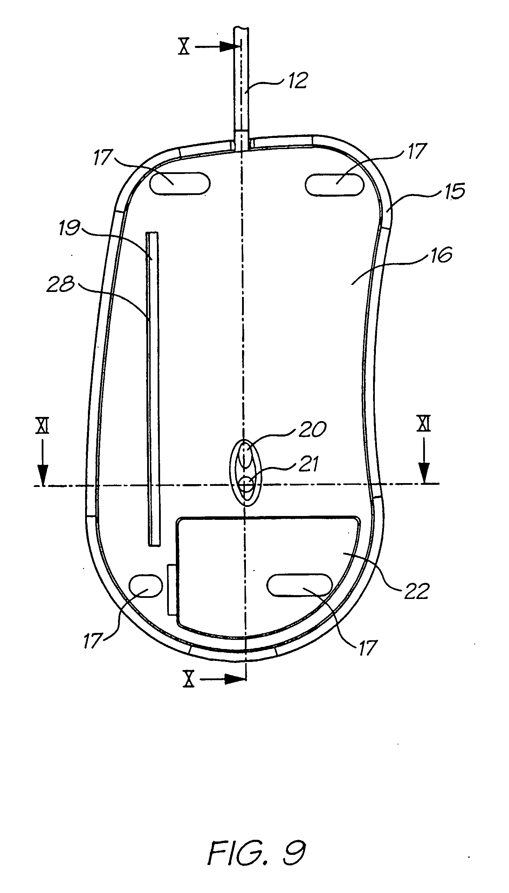

Fig. 8 is an end elevational view of the mouse;
Fig. 9 is a schematic inverted plan view of the mouse;
Fig. 10 is a schematic cross-sectional elevational view of the mouse taken at X-X in Fig. 9;
Fig. 11 is a schematic cross-sectional end elevational view of the mouse taken at XI-XI in Fig. 9; and
Fig. 12 is a schematic perspective view of internal components of the mouse.

### DESCRIPTION OF THE PREFERRED EMBODIMENT

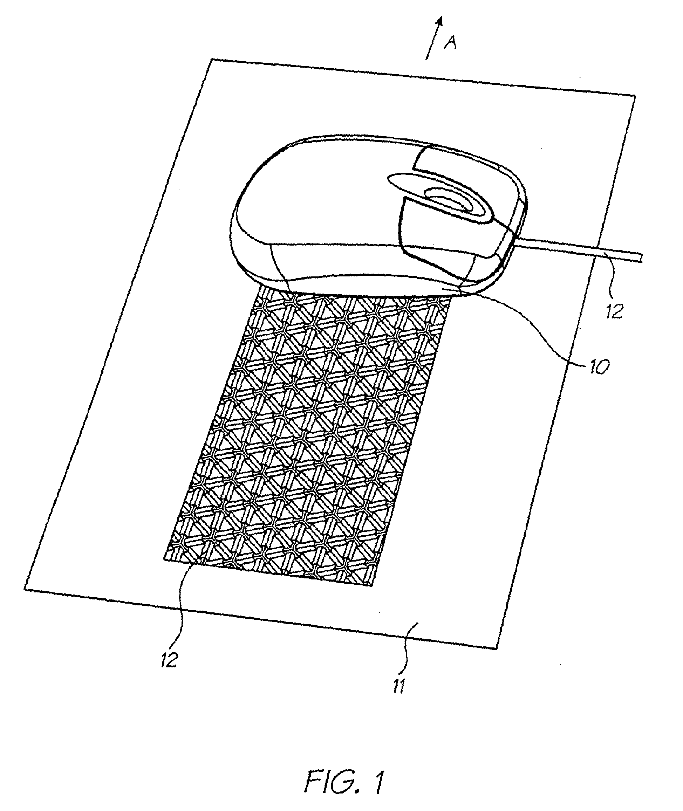

In Fig. 1 of the accompanying drawings there is schematically depicted a mouse 10 having almost completely traversed a page of print media 11 so as to print an image 12 thereon. Mouse 10 is connected to a computer via a universal serial bus (USB) cable 12, although any suitable data connection, including a wireless infrared or radio based connection, can be used instead.

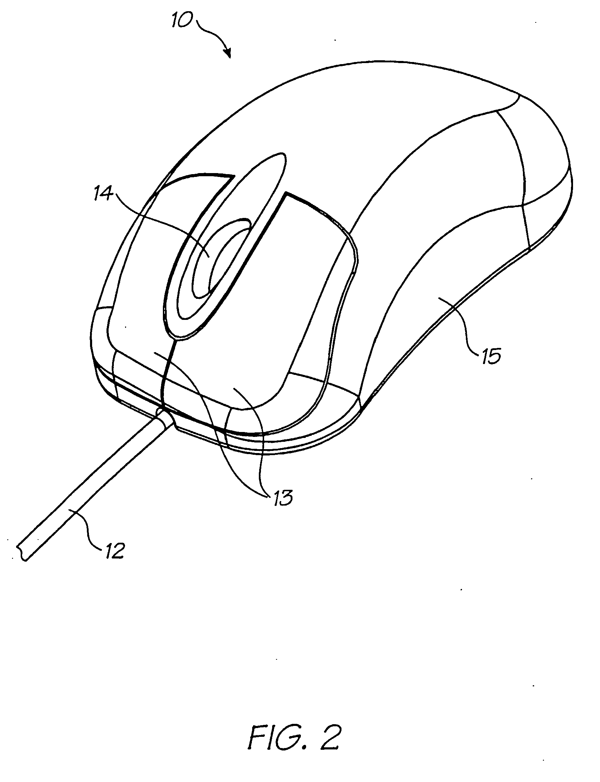

As shown in Fig. 2, the mouse 10 looks similar to a known mouse from above and includes a top molding 15, a pair of button moldings 13 and a scroll wheel/button 14 situated therebetween.

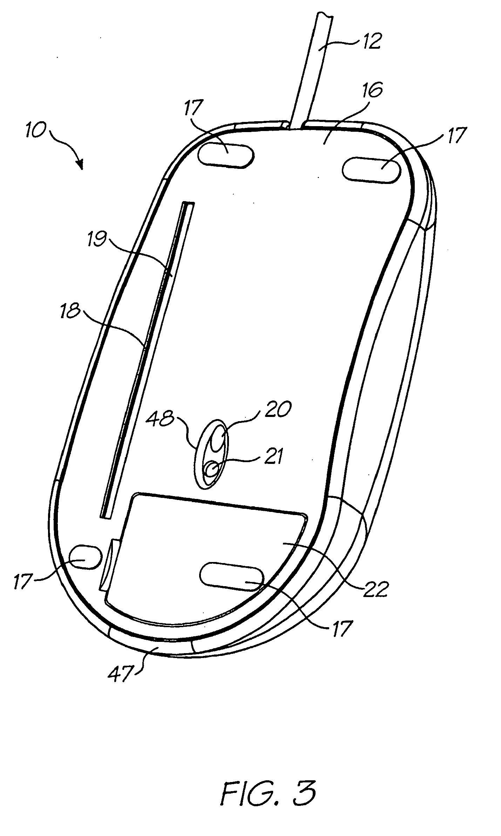

The underside of the mouse is shown in Fig. 3, including a base molding 16 to which the top molding 15 is attached. A number of slider pads 17 are attached to the base molding 16, thereby enabling the mouse to slide smoothly over a mouse pad or a sheet of print media.

A light pipe 20 emits light through an opening 48 so as to be reflected from a surface of a mouse pad or the print media and received by lens 21.

Also shown is a "MEMJET" printer chip 18 flanked by the slider pads 17. A mechanical capper device 19 caps the "MEMJET" chip 18 when printing is not in operation.

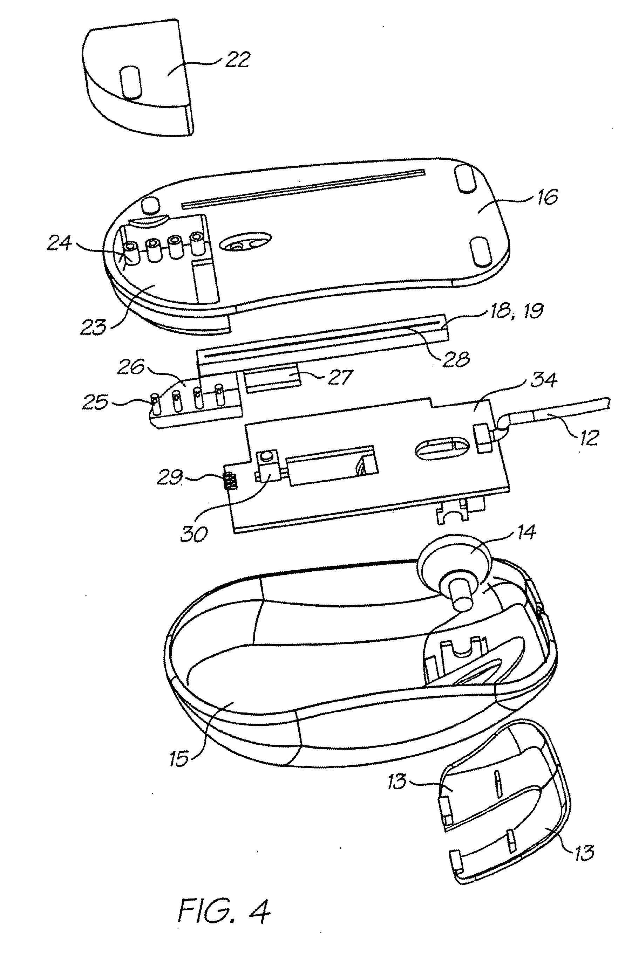

An ink cartridge 22 (Fig. 3) is received within an ink cartridge bay 23 (Fig. 4). A number of flexible collars 24 extend into the ink cartridge bay 23. A corresponding number of ink pins 25 projecting from an ink connector block 26 extend into the flexible collars 24 of the ink cartridge bay 23.

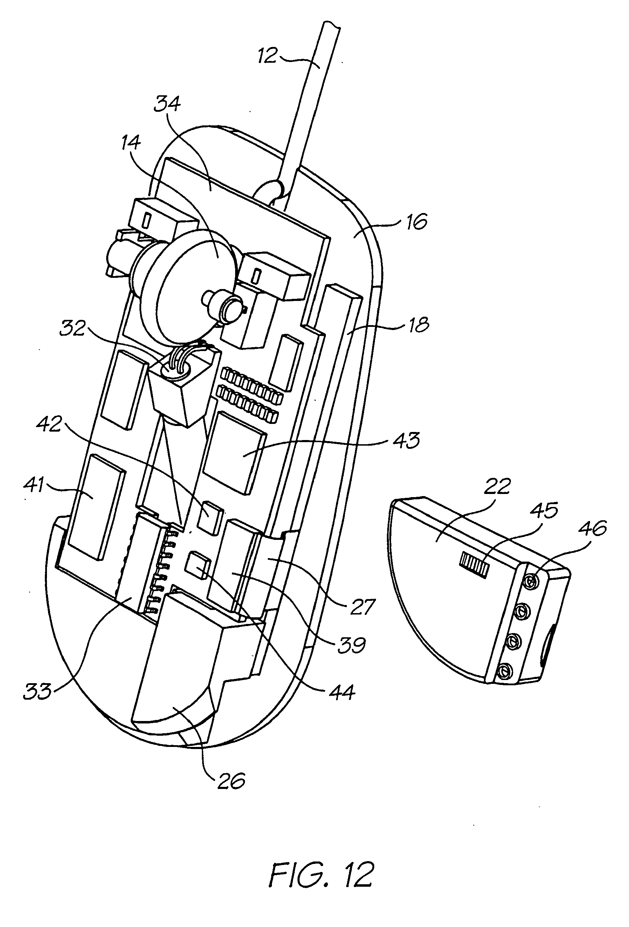

The ink connector block 26 conveys ink to the printhead 18. A flexible printed circuit board (PCB) 27 is connected to the printhead 18. A print chip 28 forms part of the printhead 18. A printed circuit board (PCB) 34 is housed within the mouse and has attached to it the USB cable 12. Also attached to the PCB 34 are QA chip contacts 29 adapted to contact a QA chip 45 (Fig. 12) on the ink cartridge 22.

An optical lens molding 30 is attached to the PCB 34 as shown.

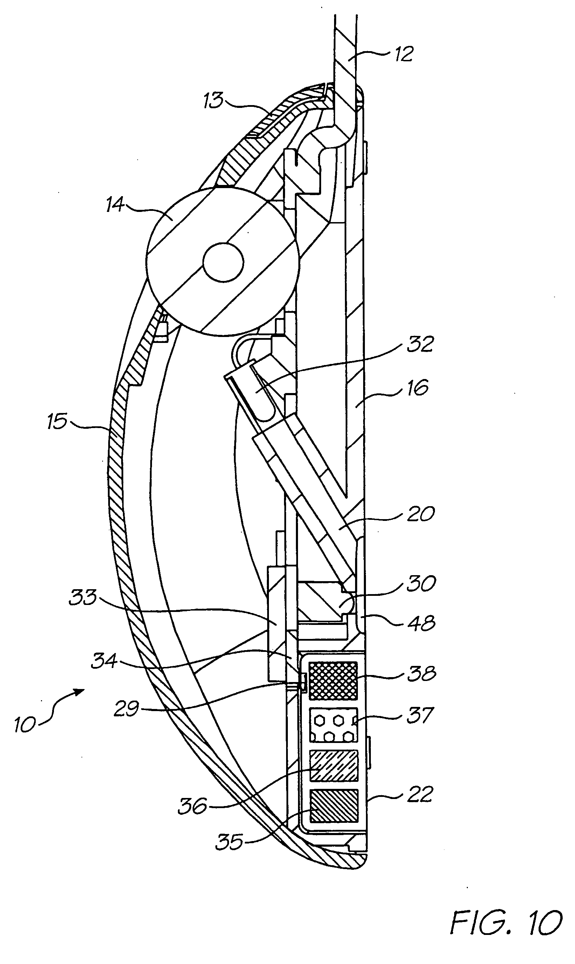

As shown in Fig. 10, there is located within the mouse 10 a high power/intensity light emitting diode (LED) 32. This emits light into the light pipe 20 for reflection from the surface and collection by the lens 30 to be focused on a CCD chip 33. The arrangement of LED 32, light pipe 20, lens 30 and the CCD chip 33 is known, and is used, for example, in the Microsoft "IntelliMouse® Explorer".

As can be seen in the cross-sectional view in Fig. 10, the ink cartridge 22 comprises individual compartments for cyan ink 35, black ink 36, yellow ink 37 and magenta ink 38.

The construction and operation of scroll wheel and button 14 is also well known, and is used in, for example, Microsoft "IntelliMouse® " models.

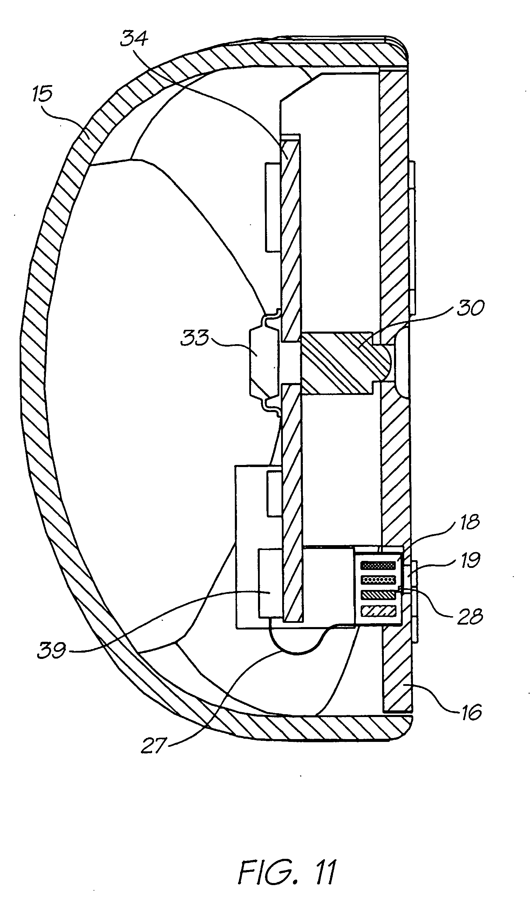

As shown in Fig. 11, the flexible PCB 27 is connected via flex connector 39 to the PCB 34. The flex PCB transmits power and data to the printhead 18 for operational control of the "MEMJET" print chip 28 and capper device 29.

Electronic components attached to the PCB 34 are shown in Fig. 12. These include the CCD chip 33, the print engine controller chip (PEC) 43, a dynamic random access memory (DRAM) chip 41 and a flash memory chip 42.

In use, the mouse can be manipulated by a user to control software in a conventional manner. That is, motion of the mouse upon a mouse pad or other surface results in corresponding movement of the pointer on a monitor. Clicking of the mouse buttons 13 results in conventional software effects.

In order to print an image 12 on a page, software can be activated by use of the mouse and/or a keyboard.

The mouse can then be manipulated by a user to traverse page 11 in a straight line indicated by arrow A in Fig. 1. Motion of the mouse 10 is detected via lens 21 by the CCD chip 33. Positional information can be transmitted via cable 12 to the computer, which in turn sends print control signals back down cable 12 to the mouse and printhead 18. More preferably however, the positional information read by CCD chip 33 is relayed directly via PCB 34 to the PEC chip 43 which takes graphic information from DRAM memory 41 and controls the printhead 18 so as to deposit ink onto media 11 depending on the speed at which the mouse is manipulated by the user to traverse the page.

In order to ensure a straight or "parallel" movement of the mouse across the page in the printing operation, its back edge 47 might be provided as a straight edge to bear against a straight ruler, for example, held in place by a user upon the print media 11. That is, the mouse can be drawn against an edge of a ruler for example to ensure correct, parallel printing in a direction normal to the longitudinal extent of the print chip 18. Smearing of ink directly after its deposit onto the print media 11 by slider pads 17 does not occur as the pads are located longitudinally outward of the print chip 18.

In an alternative embodiment (not shown), the printhead is configured to print coded data onto the media, preferably in an infrared ink that is substantially invisible to humans. It is particularly preferred that the coded data be printed in addition to other, visible data, such that a coded data reader can be used by a user to sense the coded data on the media even where there is visible printed information. Further information about the applicant's Netpage system incorporating such coded data reading and printing is disclosed in the patent applications and patents listed in the paragraph headed "Related Patent Applications and Patents", at page 2.

It will be appreciated that various aspects of the printhead such as size, resolution, orientation relative to the mouse, number and type of printable inks and the like can be varied without departing from the scope of the invention as claimed. Although various aspects of the invention have been described with reference to a number of specific embodiments, it will be appreciated that the invention can be embodied in many other forms. It will further be understood that any reference herein to known prior art does not, unless the contrary indication appears, constitute an admission that such prior art is commonly known by those skilled in the art to which the invention relates.

## Claims

1. A mouse pointing device comprising:
a housing;
a motion sensor mounted to the housing and serving to relay positional data from the device to a computer so as to effect motion of a graphic pointer on a monitor associated with the computer; and
a printer located within the housing and configured to receive print data from the computer, the printer being configured to print an image, based on the print data, onto print media external to said housing as the housing traverses said media, said motion sensor providing positional data of the housing relative to said print media to the printer during printing, and
an ink cartridge bay provided in the housing for receiving an ink cartridge in use to thereby supply ink to the printer, the housing including a number of flexible collars extending into the ink cartridge bay.

2. The device of claim 1, wherein the printer includes a drop-on-demand inkjet printhead including a plurality of ink ejection nozzles.

3. The device of claim 2, wherein the housing also includes a print controller including a computer processor into which said print data can be input and converted into a sequence of drop ejection control signals, said print controller operating said ink ejection nozzles in accordance with said drop ejection control signals to cause printing on said print media at a rate determined using a measured relative speed between the printhead and the print media.

4. The device of claim 1 wherein said motion sensor includes a light source to emit light onto a surface on which said device is used, and a lens through which light reflected from said surface passes to a CCD chip.

5. The device of claim 1, wherein the printer includes a printhead fabricated at least partially using microelectromechanical processes.

6. The device of claim 1, the ink cartridge including a number of compartments for respective ink colours, the ink cartridge being received by the cartridge bay in use.

7. The device of claim 6, the device further including a number of pins extending into the flexible collars, the pins being adapted to cooperate with respective compartments in the cartridge.

8. The device of claim 1, the housing including a number of slider pads adapted to allow the housing to slide over the print media.

9. The device of claim 1, the printer extending along the housing in a first direction, wherein in use the device is adapted to be moved in a second direction substantially normal to the first direction to effect printing.

10. The device of claim 9, the housing including slider pads being spaced from the printer in the first direction to thereby prevent smearing of deposited ink.

## Patentansprüche

1. Mauszeigevorrichtung, umfassend:
ein Gehäuse;
einen Bewegungssensor, der am Gehäuse montiert ist und dazu dient, Positionsdaten von der Vorrichtung zu einem Computer derart weiterzuleiten, dass eine Bewegung eines Grafikzeigers auf einem Monitor bewirkt wird, der dem Computer zugeordnet ist; und
einen Drucker, der innerhalb des Gehäuses angeordnet und dazu ausgelegt ist, Druckdaten von dem Computer zu empfangen, wobei der Drucker dazu ausgelegt ist, basierend auf den Druckdaten ein Bild auf ein Druckmedium außerhalb des Gehäuses zu drucken, während des Gehäuse über das Medium fährt, wobei der Bewegungssensor Positionsdaten des Gehäuses relativ zu dem Druckmedium an den Drucker während des Druckens liefert, und
einen Tintenpatronenschacht, der in dem Gehäuse vorgesehen ist, um im Gebrauch eine Tintenpatrone aufzunehmen, um hierdurch Tinte an den Drucker zu liefern, wobei das Gehäuse mehrere flexible Kragenelemente enthält, die sich in den Tintenpatronenschacht hinein erwecken.

2. Vorrichtung nach Anspruch 1, wobei der Drucker einen Tropfenbei-Bedarf-Tintenstrahldruckkopf enthält, der eine Mehrzahl von Tintenausstoßdüsen umfaßt.

3. Vorrichtung nach Anspruch 2, wobei das Gehäuse ferner einen Drucker-Kontroller enthält, der einen Computerprozessor aufweist, in den die Druckdaten eingegeben und in eine Folge von Tropfenausstoßkontrollsignalen umgewandelt werden können, wobei der Drucker-Kontroller die Tintenausstoßdüsen entsprechend den Tropfenausstoßkontrollsignalen betreibt, um ein Drucken auf dem Druckmedium mit einer Rate zu bewirken, die unter Verwendung einer gemessenen Relativgeschwindigkeit zwischen dem Druckkopf und dem Druckmedium bestimmt ist.

4. Vorrichtung nach Anspruch 1, wobei der Bewegungssensor eine Lichtquelle enthält, um Licht auf eine Oberfläche zu emittieren, auf der die Vorrichtung eingesetzt wird, sowie eine Linse, durch welche Licht, das von der Oberfläche reflektiert wird, zu einem CCD-Chip gelangt.

5. Vorrichtung nach Anspruch 1, wobei der Drucker einen Druckkopf enthält, der zumindest teilweise unter Verwendung mikroelektromechanischer Prozesse hergestellt ist.

6. Vorrichtung nach Anspruch 1, wobei die Druckpatrone mehrere Fächer für jeweilige Tintenfarben enthält, wobei die Druckpatrone im Gebrauch durch den Patronenschacht aufgenommen ist.

7. Vorrichtung nach Anspruch 6, wobei die Vorrichtung ferner mehrere Stifte enthält, die sich in die flexiblen Kragenelemente hinein erstrecken, wobei die Stifte dazu ausgelegt sind, mit jeweiligen Fächern in der Patrone zusammenzuwirken.

8. Vorrichtung nach Anspruch 1, wobei das Gehäuse mehrere Gleitfüße aufweist, die dazu ausgelegt sind, dem Gehäuse ein Gleiten über das Druckmedium zu ermöglichen.

9. Vorrichtung nach Anspruch 1, wobei sich der Drucker entlang des Gehäuses in einer ersten Richtung erstreckt, wobei die Vorrichtung im Gebrauch dazu ausgelegt ist, in einer zweiten Richtung bewegt zu werden, die im wesentlichen senkrecht zu der ersten Richtung verläuft, um ein Drucken zu bewirken.

10. Vorrichtung nach Anspruch 9, wobei das Gehäuse Gleitfüße aufweist, die in der ersten Richtung vom Drucker beabstandet sind, um hierdurch ein Verschmieren abgeschiedener Tinte zu verhindern.

## Revendications

1. Dispositif de pointage de type souris comprenant :
un boîtier ;
un détecteur de mouvement monté sur le boîtier et servant à relayer des données positionnelles du dispositif vers un ordinateur, de façon à faire se déplacer un pointeur graphique sur un moniteur associé à l'ordinateur ; et
une imprimante située à l'intérieur du boîtier et configurée de façon à recevoir des données d'impression en provenance de l'ordinateur, l'imprimante étant configurée de façon à imprimer une image, en fonction des données d'impression, sur un support d'impression externe audit boîtier au fur et à mesure que le boîtier balaye ledit média, ledit détecteur de mouvement fournissant à l'imprimante des données positionnelles du boîtier par rapport audit support d'impression pendant l'impression ; et
une baie pour cartouche d'encre aménagée dans le boîtier pour recevoir une cartouche d'encre pendant l'utilisation, pour l'alimentation de l'imprimante en encre, le boîtier comprenant un certain nombre de manchons souples s'étendant dans la baie pour cartouche d'encre.

2. Dispositif selon la revendication 1, dans lequel l'imprimante comprend une tête d'impression à jet d'encre du type goutte à la demande, comprenant une pluralité de buses d'éjection d'encre.

3. Dispositif selon la revendication 2, dans lequel le boîtier comprend également un contrôleur d'imprimante contenant un processeur informatique dans lequel lesdites données d'impression peuvent être introduites et converties en une séquence de signaux de commande d'éjection de gouttes, ledit contrôleur d'impression actionnant lesdites buses d'éjection d'encre en fonction desdits signaux de commande d'éjection de gouttes, pour provoquer l'impression sur ledit support d'impression, à une vitesse déterminée au moyen d'une vitesse relative mesurée entre la tête d'impression et le support d'impression.

4. Dispositif selon la revendication 1, dans lequel ledit détecteur de mouvement comprend une source lumineuse qui émet de la lumière sur une surface sur laquelle ledit dispositif est utilisé, et une lentille que la lumière réfléchie par ladite surface traverse jusqu'à une puce CCD.

5. Dispositif selon la revendication 1, dans lequel l'imprimante comprend une tête d'impression fabriquée au moyen partiellement à l'aide de procédés microélectromécaniques.

6. Dispositif selon la revendication 1, dans lequel la cartouche d'encre comprend un certain nombre de compartiments pour des couleurs d'encre respectives, la cartouche d'encre étant reçue par la baie pour cartouche pendant l'utilisation.

7. Dispositif selon la revendication 6, le dispositif comprenant, en outre, un certain nombre d'aiguilles s'étendant dans les manchons souples, les aiguilles étant adaptées pour coopérer avec des compartiments respectifs de la cartouche.

8. Dispositif selon la revendication 1, dans lequel le boîtier comprend un certain nombre de patins de glissement adaptés pour permettre au boîtier de glisser sur le support d'impression.

9. Dispositif selon la revendication 1, dans lequel l'imprimante s'étend le long du boîtier dans une première direction, et, pendant l'utilisation, le dispositif est adapté pour être déplacé dans une deuxième direction essentiellement perpendiculaire à la première direction, pour réaliser une impression.

10. Dispositif selon la revendication 9, dans lequel le boîtier comprend des patins de glissement espacés de l'imprimante dans la première direction, pour ainsi empêcher l'étalement de l'encre déposée.
